(19) Europäisches Patentamt

European Patent Office

Office européen des brevets

(11) **EP 4 212 354 A1**

(12) **EUROPEAN PATENT APPLICATION**
published in accordance with Art. 153(4) EPC

(43) Date of publication:
19.07.2023 Bulletin 2023/29

(21) Application number: 21889007.7

(22) Date of filing: 15.10.2021

(51) International Patent Classification (IPC):
B60C 1/00 (2006.01)    C08K 5/521 (2006.01)
C08L 15/00 (2006.01)    C08L 21/00 (2006.01)
C08L 101/00 (2006.01)   C08K 3/36 (2006.01)
B60C 3/04 (2006.01)     B60C 11/00 (2006.01)

(52) Cooperative Patent Classification (CPC):
B60C 1/00; B60C 3/04; B60C 11/00; C08K 3/36;
C08K 5/521; C08L 15/00; C08L 21/00;
C08L 101/00

(86) International application number:
PCT/JP2021/038290

(87) International publication number:
WO 2022/097454 (12.05.2022 Gazette 2022/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 04.11.2020 JP 2020184286

(71) Applicant: Sumitomo Rubber Industries, Ltd.
Kobe-shi, Hyogo 651-0072 (JP)

(72) Inventor: ONO, Shuichiro
Kobe-shi, Hyogo 651-0072 (JP)

(74) Representative: Manitz Finsterwald
Patent- und Rechtsanwaltspartnerschaft mbB
Martin-Greif-Strasse 1
80336 München (DE)

(54) **TIRE**

(57) Provided is a tire comprising a tread, wherein the tread has a groove inclined in a tire circumferential direction or a tire width direction, wherein the tread has at least one rubber layer consisting of a rubber composition comprising a rubber component, and wherein, using an atomic force microscope equipped with a probe having a tip radius of 20 nm, 5 $\mu$m square of a surface of the rubber composition is scanned at 0°C and 23°C, a van der Waals force acting between the surface and the probe at each of 64 evenly spaced points per side is measured, respectively, an average value of squared values of the van der Waals force measured at each point and a standard deviation of the squared values of the van der Waals force measured at each point are calculated, respectively, and when a ratio of the standard deviation of the squared values of the van der Waals force to the average value of the squared values of the van der Waals force at 0°C is defined as $CV_0$ and a ratio of the standard deviation of the squared values of the van der Waals force to the average value of the squared values of the van der Waals force at 23°C is defined as $CV_{23}$, $CV_0/CV_{23}$ is 2.0 or more.

FIG. 1

**Description**

TECHNICAL FIELD

The present disclosure relates to a tire whose wet grip performance is maintained over a long period of time.

BACKGROUND ART

A method of enhancing braking performance on an icy road surface by compounding an eggshell powder and the like in a rubber layer constituting a tread grounding surface to obtain a scratching effect (Patent Document 1) is known.

PRIOR ART DOCUMENT

Patent Document

Patent Document 1: JP 2019-167410 A

SUMMARY OF THE INVENTION

PROBLEM TO BE SOLVED BY THE INVENTION

However, with the above-described method, in running on a normal wet or dry road surface, there is concern that an actual contact area becomes small due to an effect of hardness of these substances compounded in the rubber layer, resulting in a decrease in braking performance.

It is an object of the present disclosure to provide a tire having improved wet grip performance and on-ice grip performance with a good balance.

MEANS TO SOLVE THE PROBLEM

As a result of intensive studies, it has been found that the above-described problem can be solved by a tire having an inclined groove on a tread, wherein a parameter, obtained by a van der Waals force when scanning a rubber composition constituting the tread rubber under a predetermined temperature using an atomic force microscope, is set within a predetermined range.

That is, the present disclosure relates to a tire comprising a tread, wherein the tread has a groove inclined in a tire circumferential direction or a tire width direction, wherein the tread has at least one rubber layer consisting of a rubber composition comprising a rubber component, and wherein, using an atomic force microscope equipped with a probe having a tip radius of 20 nm, 5 $\mu$m square of a surface of the rubber composition is scanned at 0°C and 23°C, a van der Waals force acting between the surface and the probe at each of 64 evenly spaced points per side is measured, respectively, an average value of squared values of the van der Waals force measured at each point and a standard deviation of the squared values of the van der Waals force measured at each point are calculated, respectively, and when a ratio of the standard deviation of the squared values of the van der Waals force to the average value of the squared values of the van der Waals force at 0°C is defined as $CV_0$ and a ratio of the standard deviation of the squared values of the van der Waals force to the average value of the squared values of the van der Waals force at 23°C is defined as $CV_{23}$, $CV_0/CV_{23}$ is 2.0 or more.

EFFECT OF THE INVENTION

According to the present disclosure, provided is a tire having improved wet grip performance and on-ice grip performance with a good balance.

BRIEF DESCRIPTION OF THE DRAWINGS

FIG. 1 is a schematic view of a grounding surface when a tread of a tire according to the present disclosure is pressed against a flat surface.
FIG. 2 is a schematic view of a grounding surface when another tread of the tire according to the present disclosure is pressed against a flat surface.

FIG. 3 is a schematic view of a grounding surface when a tread of a tire in Comparative examples is pressed against a flat surface.

EMBODIMENT FOR CARRYING OUT THE INVENTION

The tire that is one embodiment of the present disclosure is a tire comprising a tread, wherein the tread has a groove inclined in a tire circumferential direction or a tire width direction, wherein the tread has at least one rubber layer consisting of a rubber composition comprising a rubber component, and wherein, using an atomic force microscope equipped with a probe having a tip radius of 20 nm, 5 $\mu$m square of a surface of the rubber composition is scanned at 0°C and 23°C, a van der Waals force acting between the surface and the probe at each of 64 evenly spaced points per side is measured, respectively, an average value of squared values of the van der Waals force measured at each point and a standard deviation of the squared values of the van der Waals force measured at each point are calculated, respectively, and when a ratio of the standard deviation of the squared values of the van der Waals force to the average value of the squared values of the van der Waals force at 0°C is defined as $CV_0$ and a ratio of the standard deviation of the squared values of the van der Waals force to the average value of the squared values of the van der Waals force at 23°C is defined as $CV_{23}$, $CV_0/CV_{23}$ is 2.0 or more (preferably 2.2 or more, more preferably 2.4 or more, further preferably 2.6 or more).

Although it not intended to be bound by theory, in the present disclosure, the following can be considered as a mechanism by which wet grip performance and on-ice grip performance can be improved with a good balance. In other words, $CV_0$ and $CV_{23}$ are considered to represent minute variations in hardness of the tread surface at 0°C and 23°C, respectively. Here, by setting $CV_0/CV_{23}$ to be 2.0 or more and the variation in hardness at 0°C to be twice or more the variation in hardness at 23°C, it is considered that it becomes possible to form a minute hard domain on the tread surface at a low temperature. For this reason, the minute hard domain creates a scratching effect on an icy road surface, so that it is considered that it becomes possible to improve braking performance on ice. On the other hand, such a domain disappears at 23°C, which does not hinder braking performance on a wet road surfaces, making it possible to achieve compatibility with wet braking performance.

Also, it is considered that a curved groove easily retains snow on ice therewithin, allowing for the land part of the tread to be further cooled and less likely to be heated up. Therefore, it becomes possible to prevent the minute hard domain from disappearing from the tread surface due to heat generation by running, on an icy road surface, and as a result, it is considered that it becomes possible to improve braking performance on the icy road surface.

The rubber composition preferably comprises 1 to 30 parts by mass of the thermoplastic elastomer based on 100 parts by mass of the rubber component.

A glass transition temperature (Tg) of the thermoplastic elastomer is preferably -20°C to 20°C.

The thermoplastic elastomer is preferably a styrene-based thermoplastic elastomer.

The rubber component preferably comprises at least one of an isoprene-based rubber and a butadiene rubber. Both the isoprene-based rubber and the butadiene rubber are good in cold resistance and have soft properties at a low temperature, and therefore, they become soft domain phases at 0°C, so that it is considered that a scratching effect of a hard domain becomes easily obtained.

The rubber component preferably comprises a modified styrene-butadiene rubber.

The rubber composition preferably comprises 30 to 130 parts by mass of silica based on 100 parts by mass of the rubber component.

The rubber composition preferably comprises 1 to 20 parts by mass, more preferably 3 to 15 parts by mass of at least one selected from a liquid polymer and a phosphate ester, based on 100 parts by mass of the rubber component.

The rubber composition preferably comprises 1 to 30 parts by mass of a resin component based on 100 parts by mass of the rubber component.

When a tire cross-sectional width is defined as Wt (mm) and a tire outer diameter is defined as Dt (mm), Wt and Dt preferably satisfy the following inequality (1):

$$(\pi/4) \times (Dt^2/Wt) \geq 1700 \quad (1)$$

A procedure for producing a tire that is one embodiment of the present disclosure will be described in detail below. However, the following descriptions are illustrative for explaining the present disclosure, and are not intended to limit the technical scope of the present disclosure to this description range only. Besides, in the present specification, a numerical range identified with "to" means to include the numerical values of both ends.

Hereinafter, the tire according to one embodiment of the present disclosure will be described with reference to the drawings. Besides, embodiments shown below are merely examples, and the tire of the present disclosure is not limited to the following embodiments.

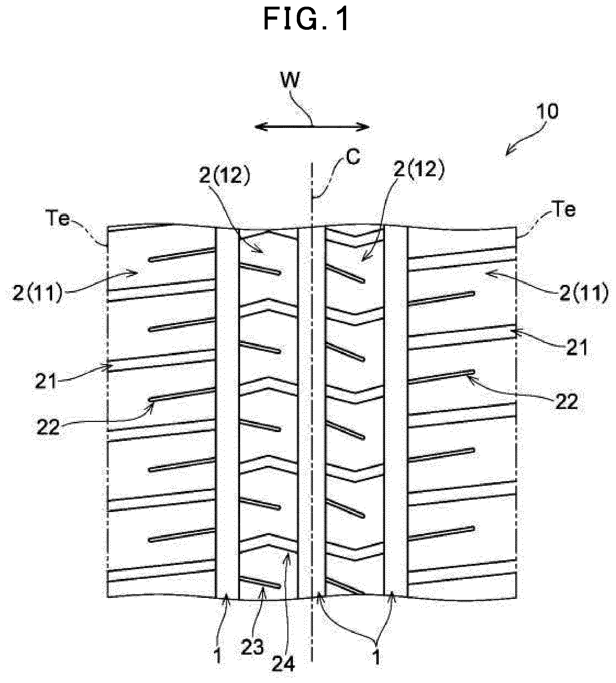

FIG. 1 shows a schematic view of a grounding surface when a tread is pressed against a flat surface. The tread 10 has a plurality of circumferential grooves 1 extending continuously in the circumferential direction. In FIG. 1, three circumferential grooves 1 are provided, though the number of circumferential grooves is not particularly limited, and may be, for example, two to five. Moreover, in the present disclosure, although the circumferential groove 1 extends linearly along the circumferential direction, it is not limited to such an embodiment, and may extend in, for example, a wavy shape, a sinusoidal shape, or a zigzag shape along the circumferential direction.

Each tread end Te is in a grounding position on the outermost side in the tire width direction W (the left-right direction in FIG. 1, hereinafter simply referred to as a width direction W) when a standardized load is applied to the tire in the standardized state and the tire grounds a flat surface at a camber angle of 0 degree.

The tread 10 has land parts 2 partitioned by a plurality of circumferential grooves 1 in a tire width direction W. A shoulder land part 11 is a pair of land parts formed between the circumferential groove 1 and the tread end Te. A center land part 12 is a land part formed between a pair of shoulder land parts 11. In FIG. 1, two center land parts 12 are provided, though the number of center land parts is not particularly limited and may be, for example, one to five.

The tread 10 has a groove inclined in the tire circumferential direction or the tire width direction. Specifically, the groove inclined in the tire circumferential direction or the tire width direction is a lateral groove extending in the tire width direction, the lateral groove being bent or curved during a process of proceeding in the width direction.

In FIG. 1, the shoulder land part 11 is provided with a plurality of linear-shaped shoulder lateral grooves 21 having a terminal end opened to the circumferential groove 1 and a plurality of linear-shaped shoulder sipes 22 having one end opened to the circumferential groove 1. The center land part 12 is provided with a plurality of center lateral grooves 24 having both ends opened to the circumferential groove 1 and being bent during a process of going from one end in the width direction toward the other end, and a plurality of linear-shaped center sipes 23 having one end opened to the circumferential groove 1. The center lateral groove 24 is bent so that an extending direction changes at a central part in the width direction. Specifically, in FIG. 1, the center lateral groove 24 is inclined so as to shift to one side in the tire circumferential direction as it goes from one end of the center lateral groove 24 in the width direction toward the central part in the width direction. The center lateral groove 24 is bent at the central part in the width direction, and is inclined in the opposite direction so as to shift to the other side in the tire circumferential direction as it goes from the central part in the width direction of the center lateral groove 24 toward the other end.

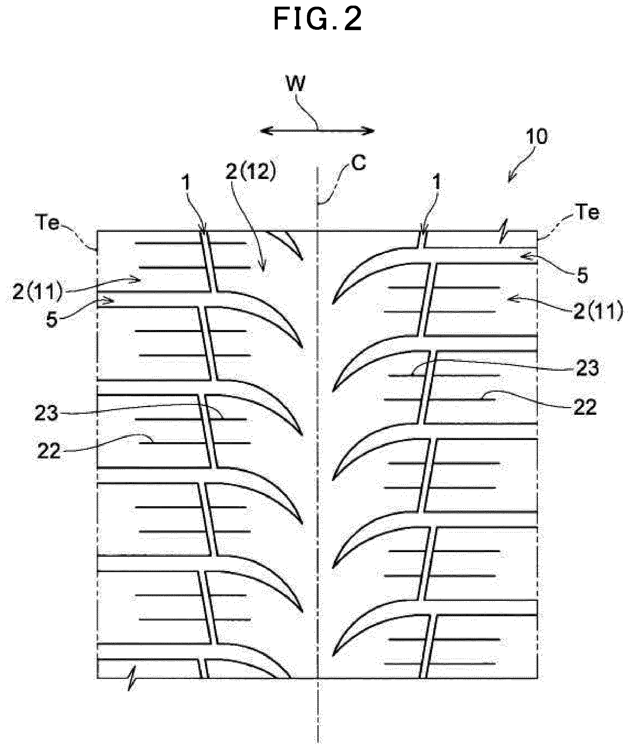

FIG. 2 shows a schematic view of a grounding surface when another tread of the tire according to the present disclosure is pressed against a flat surface. The tread 10 has a plurality of zigzag-shaped circumferential grooves 1 extending continuously in a circumferential direction. A lateral groove 5 is curved so as to shift to one side in the tire circumferential direction as it goes toward the central part in the tire width direction. In the present disclosure, a plurality of lateral grooves 5 are continuously connected in the circumferential direction by the zigzag-shaped circumferential grooves 1. In addition, the lateral groove 5 extends across the circumferential groove 1 at the bent part of the circumferential groove 1. Moreover, the shoulder part 11 is provided with a plurality of linear-shaped shoulder sipes 22 having a terminal end opened to the circumferential groove 1, and the center land part 12 is provided with a plurality of linear-shaped center sipes 23 having one end opened to the circumferential groove 1. Besides, the circumferential grooves 1 do not necessarily have to be continuous in the circumferential direction, and may be divided by the lateral grooves 5.

Besides, in the present specification, a "groove" including the circumferential groove and the lateral groove refers to a recess having a width at least larger than 2.0 mm. On the other hand, in the present specification, a "sipe" refers to a narrow notch having a width of 2.0 mm or less, preferably 0.5 to 2.0 mm.

A "standardized rim" is a rim defined for each tire in a standard system including a standard, on which the tire is based, by the standard, i.e., a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

A "standardized internal pressure" is an air pressure defined for each tire in a standard system including a standard on, which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard system, the standardized internal pressure shall be 250 kPa.

A "standardized state" is a state where the tire is rim-assembled on a standardized rim, a standardized internal pressure is filled, and no load is applied. Besides, in a case of a tire having a size not specified in the above-described standard system, the standardized state is a state where the tire is rim-assembled on the minimum rim, 250 kPa is filled, and no load is applied.

A "standardized load" is a load defined for each tire in a standard system including a standard, on which the tire is based, by the standard, i.e., a "MAXIMUM LOAD CAPACITY" in JATMA, the maximum value described in Table "TIRE LOAD LIMITS AT VARIOUS COLD INFLATION PRESSURES" in TRA, or "LOAD CAPACITY" in ETRTO. Besides, in the case of a tire having a size not specified in the above-described standard system, a standardized load $W_L$ (kg) can be estimated by the following equation (2) and (3) where a cross-sectional width of the tire measured in the standardized state is defined as Wt (mm), a cross-sectional height of the tire measured in the standardized state is defined as Ht (mm), and an outer diameter of the tire measured in the standardized state is defined as Dt (mm). The tire cross-sectional width Wt is the maximum width between outer surfaces of sidewalls excluding, if any, patterns or characters on the side surface of the tire in the above-described state. The tire cross-sectional height Ht is a distance from a bottom surface of a bead part to the outermost surface of a tread, which is half a difference between the outer diameter of the tire and a nominal size of a rim.

$$V = \{(Dt/2)^2 - (Dt/2 - Ht)^2\} \times \pi \times Wt \ (2)$$

$$W_L = 0.000011 \times V + 175 \ (3)$$

In the present disclosure, a dimension of each part of a tire (a tire cross-sectional width Wt, a tire outer diameter Dt, etc.) is a value measured in the above-described standardized state, unless otherwise specified.

In the tire of the present disclosure, when the tire cross-sectional width is defined as Wt (mm) and the tire outer diameter is defined as Dt (mm), which are measured in the standardized state, Wt and Dt preferably satisfy the following inequality (1):

$$(\pi/4) \times (Dt^2/Wt) \geq 1700 \ (1)$$

Here, when Dt increases, the value of the inequality (1) increases, and conversely, when Dt decreases, the value decreases. On the other hand, when Wt increases, the value of the inequality (1) decreases, and conversely, when Wt decreases, the value increases. Therefore, paying attention to this point, Dt and Wt can be adjusted so as to satisfy the inequality (1).

The value of the inequality (1) is preferably 1750 or more, more preferably 1800 or more, further preferably 1850 or more, further preferably 1900 or more, particularly preferably 1963.4 or more. The value of the inequality (1) is preferably 2827.4 or less, more preferably 2800 or less, further preferably 2700 or less, particularly preferably 2600 or less.

Specific examples of a tire size that satisfies the inequality (1) include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, 205/65R17, and the like.

The Atomic force microscope (AFM) is a kind of Scanning Probe Microscope (SPM), which is a device that obtains a three-dimensional image (concavity and convexity) of a sample surface with an atomic-level resolution by bringing a microscopic probe close to the sample surface and scanning the sample surface while detecting a change in quantum mechanical force (van der Waals force) generated between the sample and the probe.

Using an atomic force microscope equipped with a probe having a tip radius of 20 nm, 5 $\mu$m square of a surface of the rubber composition of the present disclosure is scanned at 0°C and 23°C, a van der Waals force acting between the surface and the probe at each of 64 evenly spaced points per side is measured, respectively, an average value of squared values of the van der Waals force measured at each point and a standard deviation of the squared values of the van der Waals force measured at each point are calculated, respectively, and when a ratio of the standard deviation of the squared values of the van der Waals force to the average value of the squared values of the van der Waals force at 0°C is defined as $CV_0$ and a ratio of the standard deviation of the squared values of the van der Waals force to the average value of the squared values of the van der Waals force at 23°C is defined as $CV_{23}$, $CV_0/CV_{23}$ is 2.0 or more, preferably 2.2 or more, more preferably 2.4 or more, further preferably 2.6 or more. Moreover, an upper limit value of $CV_0/CV_{23}$ is, but not particularly limited to, preferably 5.0 or less, more preferably 4.5 or less, further preferably 4.0 or less, particularly preferably 3.7 or less. When $CV_0/CV_{23}$ is within the above-described ranges, a hard domain phase is formed in the rubber component at a low temperature, and scratching performance on an icy road surface tends to be improved.

A glass transition temperature (Tg) of the rubber composition of the present disclosure is preferably -65°C or higher, more preferably -60°C or higher, further preferably -55°C or higher, from the viewpoint of effects of the present disclosure. On the other hand, the Tg is preferably -20°C or lower, more preferably -25°C or lower, further preferably -30°C or lower, particularly preferably -35°C or lower. Besides, in the present specification, the glass transition temperature (Tg) of the rubber composition refers to a tan $\delta$ peak temperature measured by the following method. That is, for a rubber test piece (for example, length 20 mm $\times$ width 4 mm $\times$ thickness 1 mm) produced by being cut out from inside of a rubber layer of a tread part of each test tire so that a tire circumferential direction is on a long side, a temperature distribution curve of tan $\delta$ is measured under a condition of a frequency of 10 Hz and an elongational strain of 2.5%, using a dynamic viscoelasticity evaluation device (EPLEXOR series manufactured by gabo Systemtechnik GmbH), and a temperature corresponding to the largest tan δ value in the obtained temperature distribution curve (tan δ peak temperature) shall be defined as a glass transition temperature (Tg) of the rubber composition in the present disclosure.

The tread of the present disclosure has at least one rubber layer. The rubber layer may be formed of a single rubber layer, and further may have one or more rubber layers inside in a tire radial direction of the rubber layer (cap rubber layer) whose outer surface constitutes a tread surface. When the rubber layer is composed of two or more rubber layers, at least one of the two or more rubber layers may be composed of a predetermined rubber composition as mentioned above, and it is preferable that the cap rubber layer is composed of the predetermined rubber composition as mentioned above.

[Rubber composition]

The tire of the present disclosure can more effectively improve wet grip performance and on-ice grip performance by cooperation of the structures of the tire as mentioned above, particularly the tread pattern, with the physical property of the rubber composition constituting the tread.

<Rubber component>

The rubber composition according to the present disclosure preferably comprises at least one selected from a group consisting of an isoprene-based rubber, a styrene-butadiene rubber (SBR), and a butadiene rubber (BR), as rubber components. The rubber component preferably comprises an isoprene-based rubber, more preferably comprises an isoprene-based rubber and a BR, and may be a rubber component consisting only of an isoprene-based rubber and a BR.

(Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded in the rubber component is preferably 10% by mass or more, more preferably 20% by mass or more, further preferably 25% by mass or more, particularly preferably 30% by mass or more, from the viewpoint of wet grip performance. On the other hand, an upper limit of the content of the isoprene-based rubber is not particularly limited, and it can be, for example, 90% by mass or less, 80% by mass or less, 70% by mass or less, or 60% by mass or less.

(BR)

The BR is not particularly limited, and those common in the tire industry can be used such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95% by mass or more, more preferably 96% by mass or more, further preferably 97% by mass or more, particularly preferably 98% by mass or more. Besides, in the present specification, the cis content (cis-1,4-bond butadiene unit amount) is a value calculated by infrared absorption spectrometry.

As a modified BR, a modified butadiene rubber (a modified BR) modified at its terminal and/or main chain with a functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the BR when compounded in the rubber component is preferably 80% by mass or less, more preferably 70% by mass or less, further preferably 65% by mass or less, particularly preferably 60% by mass or less, from the viewpoint of wet grip performance. Moreover, a lower limit value of the content of the BR when compounded is not particularly limited, and it can be, for example, 1% by mass or more, 3% by mass or more, 5% by mass or more, 10% by mass or more, 15% by mass or more, or 20% by mass or more.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used.

The SBRs listed above may be used alone, or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by $^1$H-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content of the SBR (1,2-bond butadiene unit amount) is measured by infrared absorption spectrometry.

A weight-average molecular weight (Mw) of the SBR is preferably 200,000 or more, more preferably 250,000 or more, further preferably 300,000 or more, from the viewpoint of wet grip performance. Moreover, it is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the SBR when compounded in the rubber component is preferably 5% by mass or more, more preferably 10% by mass or more, further preferably 15% by mass or more, particularly preferably 20% by mass or more, from the viewpoint of wet grip performance. An upper limit value of the content of the SBR in the rubber component is not particularly limited, and it can be, for example, 90% by mass or less, 80% by mass or less, 70% by mass or less, or 60% by mass or less.

(Other rubber components)

As the rubber components according to the present disclosure, rubber components other than the above-described isoprene-based rubbers, SBRs, and BRs may be compounded. As other rubber components, a cross-linkable rubber component commonly used in the tire industry can be used, examples of which include, for example, isoprene-based rubbers such as a styrene-isoprene rubber (SIR), a styrene-isoprene-butadiene rubber (SIBR), a chloroprene rubber (CR), and an acrylonitrile-butadiene rubber (NBR), diene-based rubbers other than a SBR and a BR; and rubber components other than the diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acryl rubber (ACM), and a hydrin rubber. These other rubber components may be used alone, or two or more thereof may be used in combination. The rubber component according to the present disclosure comprises preferably 80% by mass or more, more preferably 90% by mass or more, further preferably 95% by mass or more, particularly preferably 98% by mass or more of a diene-based rubber, or may be a rubber component consisting only of a diene-based rubber.

<Thermoplastic elastomer>

The rubber composition of the present disclosure preferably comprises a thermoplastic elastomer from the viewpoint of obtaining good wet grip performance and on-ice grip performance.

In the present specification, the "thermoplastic elastomer" is a polymer compound having elasticity, and means a thermoplastic resin material consisting of a copolymer which has a polymer forming a crystalline hard segment having a high melting point and a polymer forming an amorphous soft segment having a low glass transition temperature. In the thermoplastic elastomer, the crystalline hard segment having a high melting point behaves as a pseudo cross-linking point and expresses elasticity. On the other hand, the rubber has a double bond or the like in a molecular chain and generates a three-dimensional network structure and expresses elasticity by being crosslinked (vulcanized) with addition of sulfur or the like. Therefore, the thermoplastic elastomer is heated so that the hard segment is melted, and the thermoplastic elastomer is cooled so that the pseudo cross-linking points is regenerated, allowing for the thermoplastic elastomer to be reused. On the other hand, once the rubber is crosslinked (vulcanized), it generates a three-dimensional network structure and loses fluidity, which makes it difficult for the rubber to be reused even when heated. Besides, the thermoplastic elastomer of the present disclosure shall not comprise the above-described rubber component.

Examples of the thermoplastic elastomer include, but not limited to, a polyurethane-based thermoplastic elastomer, a polyester-based thermoplastic elastomer, a polyamide-based thermoplastic elastomer, a styrene-based thermoplastic elastomer, and the like. Among them, a styrene-based thermoplastic elastomer is preferable. Moreover, a copolymer of the polyurethane-based thermoplastic elastomer, the polyester-based thermoplastic elastomer, or the polyamide-based thermoplastic elastomer and a diene elastomer is also appropriately used. Among them, the copolymer of the polyurethane-based thermoplastic elastomer and the diene elastomer is preferable, and a copolymer of the polyurethane-based thermoplastic elastomer and a styrene-based thermoplastic elastomer is more preferable.

The polyurethane-based thermoplastic elastomer is not particularly limited, but for example, those prepared from polyol and diisocyanate can be appropriately used. Examples of polyol include a polyester-based polyol, a polyester ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

The polyester-based thermoplastic elastomer is not particularly limited, but for example, those using an olefin-based elastomer as a soft segment and those using polyethylene terephthalate, polybutylene terephthalate, or the like as a hard segment are appropriately used. Examples of the olefin-based elastomer include those obtained by homopolymerizing one selected from a group consisting of a linear alkene having 1 to 8 carbon atoms, a branched alkene, and polyvinyl acetate, or copolymerizing two or more of them, specifically an ethylene-vinyl acetate copolymer, an ethylene-propylene resin, a linear low-density polyethylene, and the like.

Examples of the polyamide-based thermoplastic elastomer include, but not particularly limited to, for example, polyamide (amide 6) obtained by ring-opening polycondensation of ε-caprolactam, polyamide (amide 11) obtained by ring-opening polycondensation of undecanelactam, polyamide (amide 12) obtained by ring-opening polycondensation of lauryllactam, polyamide (amide 66) obtained by polycondensation of diamine and dibasic acid, polyamide (amide MX) having meta-xylenediamine as a structural unit, and the like.

In the present disclosure, the "diene elastomer" means any homopolymer obtained by polymerization of conjugated diene monomers or any copolymer obtained by copolymerization of one or more conjugated dienes with each other or with a vinyl aromatic compound, where they may be hydrogenated, or they may be one whose terminal is modified with a hydroxyl group, a carboxyl group, an acid anhydride group, an amino groups, an epoxy groups, or the like with a modifying agent. In a case of a copolymer, the latter comprises 20% to 99% by mass of a diene unit and 1% to 80% by mass of a vinylaromatic unit.

Examples of the conjugated diene monomer include butadiene, isoprene, 1,3-pentadiene, and the like.

Examples of an aromatic vinyl monomer include styrene, o-methylstyrene, p-methylstyrene, p-t(tertiary)-butylstyrene, 1,3-dimethylstyrene, α-methylstyrene, vinylnaphthalene, vinylanthracene, and the like, and styrene is generally selected because it is readily available.

The styrene-based thermoplastic elastomer is a copolymer having at least one styrene block (hard segment) and at least one elastomer block (soft segment). A molecular structure of the styrene-based thermoplastic elastomer is, but not particularly limited, preferably a molecular structure having a styrene block at one terminal or both terminals thereof and an elastomer block in the other parts thereof. When it has a styrene block at least at one terminal thereof, a better grip performance tends to be obtained. Moreover, it is more preferable that the styrene-based thermoplastic elastomer has a structure having no styrene block in a main chain part other than terminals thereof. With such a structure, hardness of the rubber in a normal temperature range does not become too high, a better grip performance can be obtained, and better fracture characteristics and abrasion resistance tend to be obtained.

Examples of the elastomer block include, for example, vinyl-polydiene, polyisoprene, polybutadiene, polyethylene, polychloroprene, poly 2,3-dimethylbutadiene, and the like. Moreover, as the elastomer block, one obtained by hydrogenating the above-described elastomer block can also be used.

Examples of the styrene-based thermoplastic elastomer include, for example, a styrene-isobutylene block copolymer (SIB), a styrene-butadiene-styrene block copolymer (SBS), a styrene-isoprene-styrene block copolymer (SIS), a styrene-ethylene-butylene block copolymer (SEB), a styrene-ethylene/propylene block copolymer (SEP), a styrene-ethylene/butylene-styrene block copolymer (SEBS), a styrene-ethylene/butylene-ethylene block copolymer (SEBC), a hydrogenated styrene/butadiene copolymer (HSBR), a styrene-ethylene/propylene-styrene block copolymer (SEPS), a styrene-ethylene/ethylene/propylene-styrene block copolymer (SEEPS), a styrene-butadiene/butylene-styrene block copolymer (SBBS), styrene-vinyl/isoprene-styrene block copolymer (vinyl SIS), styrene-vinyl/ethylene/propylene-styrene block copolymer (vinyl SEPS), and the like.

A content of a styrene unit (styrene content ratio) of the styrene-based thermoplastic elastomer is preferably 5% by mass or more, more preferably 10% by mass or more, further preferably 15% by mass or more, from the viewpoint of wet grip performance. Moreover, it is preferably 35% by mass or less, more preferably 30% by mass or less, further preferably 25% by mass or less, from the viewpoint of suppressing heat generation.

A glass transition temperature (Tg) of the thermoplastic elastomer is preferably -20°C or higher, more preferably -18°C or higher, further preferably -16°C or higher, further preferably -14°C or higher, particularly preferably -12°C or higher. On the other hand, the Tg is preferably 20°C or lower, more preferably 15°C or lower, further preferably 10°C or lower, further preferably 5°C or lower, further preferably 0°C or lower, particularly preferably -5°C or lower. It is considered that, when the Tg of the thermoplastic elastomer is within the above-described ranges, it becomes easier to form a hard domain at 0°C. Besides, in the present specification, the glass transition temperature (Tg) of the thermoplastic elastomer refers to a tan $\delta$ peak temperature measured by the following method. That is, for a test piece that is formed into a sheet shape having a thickness of 2 mm with a roll, then vulcanized at 160°C for 30 minutes, and punched into a strip-shaped dumbbell so as to have a width of 5 mm and a length of 20 mm, using a dynamic viscoelasticity evaluation device (e.g., EPLEXOR series manufactured by gabo Systemtechnik GmbH), a temperature distribution curve of tan $\delta$ is measured under a condition of a frequency of 10 Hz and an elongational strain of 2.5%, and a temperature corresponding to the largest tan $\delta$ value in the obtained temperature distribution curve (tan $\delta$ peak temperature) shall be defined as a glass transition temperature (Tg) of the thermoplastic elastomer in the present disclosure.

A content of the thermoplastic elastomer based on 100 parts by mass of the rubber component is preferably 1 parts by mass or more, more preferably 2 parts by mass or more, further preferably 3 parts by mass or more, particularly preferably 4 parts by mass or more, from the viewpoint of forming a domain phase in a minute region to improve on-ice grip performance. Moreover, it is preferably 30 parts by mass or less, more preferably 25 parts by mass or less, further preferably 20 parts by mass or less, particularly preferably 18 parts by mass or less, from the viewpoint of preventing deterioration of on-ice grip performance due to an excessive amount of the domain phase.

<Filler>

The rubber composition of the present disclosure preferably comprises a filler comprising carbon black and/or silica. Moreover, the filler may be a filler consisting of carbon black and silica.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. As silica, for example, those manufactured and sold by Evonik Degussa GmbH, Solvay, Tosoh Silica Corporation, Tokuyama Corporation, etc. can be used. These silica may be used alone, or two or more thereof may be used in combination.

An average primary particle size of silica is preferably 22 nm or less, more preferably 20 nm or less, further preferably 18 nm or less, particularly preferably 16 nm or less. A lower limit of the average primary particle size is, but not particularly limited to, preferably 1 nm or more, more preferably 3 nm or more, further preferably 5 nm or more. When the average primary particle size of silica is within the above-described ranges, dispersibility of silica can be more improved, and reinforcing property, wet grip performance, and abrasion resistance can be further improved. Besides, the average primary particle size of silica can be calculated by observing silica with a transmission or scanning electron microscope, measuring 400 or more primary particles of silica observed in the field of view, and averaging them.

A nitrogen adsorption specific surface area ($N_2SA$) of silica is preferably 140 $m^2$/g or more, more preferably 160 $m^2$/g or more, further preferably 180 $m^2$/g or more, from the viewpoints of fuel efficiency and abrasion resistance. Moreover, it is preferably 350 $m^2$/g or less, more preferably 300 $m^2$/g or less, further preferably 250 $m^2$/g or less, from the viewpoints of fuel efficiency and processability. Besides, the $N_2SA$ of silica in the present specification is a value measured by a BET method according to ASTM D3037-93.

A content of silica based on 100 parts by mass of the rubber component is preferably 30 parts by mass or more, more preferably 40 parts by mass or more, further preferably 50 parts by mass or more, particularly preferably 55 parts by mass or more, from the viewpoint of wet grip performance. Moreover, it is preferably 150 parts by mass or less, more preferably 130 parts by mass or less, further preferably 110 parts by mass or less, particularly preferably 95 parts by mass or less, from the viewpoint of dispersibility of silica and abrasion resistance.

(Silane coupling agent)

Silica is preferably used in combination with a silane coupling agent. The silane coupling agent is not particularly limited, and any silane coupling agent conventionally used in combination with silica in the tire industry can be used. Examples of such silane coupling agent include, for example, sulfide-based silane coupling agents such as bis(3-triethoxysilylpropyl)disulfide and bis(3-triethoxysilylpropyl)tetrasulfide; mercapto-based silane coupling agents such as 3-mercaptopropyltrimethoxysilane, NXT-Z100, NXT-Z45, and NXT manufactured by Momentive Performance Materials; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, one or more selected from a group consisting of sulfide-based silane coupling agents, mercapto-based silane coupling agents, and thioester-based silane coupling agents are preferable. These silane coupling agents may be used alone, or two or more thereof may be used in combination.

A content of the silane coupling agent when compounded based on 100 parts by mass of silica is preferably 0.1 parts by mass or more, more preferably 1 parts by mass or more, further preferably 3 parts by mass or more, particularly preferably 5 parts by mass or more. Moreover, the content is preferably 20 parts by mass or less, more preferably 18 parts by mass or less, based on 100 parts by mass of silica.

A content of the silane coupling agent when compounded based on 100 parts by mass of the rubber component is preferably 0.1 parts by mass or more, more preferably 1 parts by mass or more, further preferably 2 parts by mass or more, particularly preferably 3 parts by mass or more. Moreover, the content is preferably 20 parts by mass or less, more preferably 15 parts by mass or less, further preferably 12 parts by mass or less, based on 100 parts by mass of the rubber component.

(Carbon black)

Carbon black is not particularly limited, and those common in the tire industry can be appropriately used, examples of which include, for example, GPF, FEF, HAF, ISAF, SAF, and the like. These carbon black may be used alone, or two or more thereof may be used in combination.

A nitrogen adsorption specific surface area ($N_2SA$) of carbon black is preferably 10 $m^2$/g or more, more preferably 30 $m^2$/g or more, further preferably 50 $m^2$/g or more, from the viewpoint of reinforcing property. Moreover, it is preferably 200 $m^2$/g or less, more preferably 150 $m^2$/g or less, further preferably 120 $m^2$/g or less, from the viewpoints of fuel efficiency and processability. Besides, the $N_2SA$ of carbon black is a value measured according to JIS K 6217-2: "Carbon black for rubber industry-Fundamental characteristics-Part 2: Determination of specific surface area-Nitrogen adsorption methods-Single-point procedures".

A content of carbon black based on 100 parts by mass of the rubber component is preferably 1 parts by mass or more, more preferably 3 parts by mass or more, further preferably 5 parts by mass or more, from the viewpoint of reinforcing property. Moreover, it is preferably 100 parts by mass or less, more preferably 50 parts by mass or less, further preferably 30 parts by mass or less, particularly preferably 15 parts by mass or less, from the viewpoints of processability and fuel efficiency.

A content of the whole filler based on 100 parts by mass of the rubber component is preferably 30 parts by mass or more, more preferably 40 parts by mass or more, further preferably 50 parts by mass or more, further preferably 55 parts by mass or more, further preferably 60 parts by mass or more, particularly preferably 65 parts by mass or more, from the viewpoint of wet grip performance. Moreover, it is preferably 150 parts by mass or less, more preferably 130 parts by mass or less, further preferably 120 parts by mass or less, further preferably 110 parts by mass or less, further preferably 100 parts by mass or less, particularly preferably 95 parts by mass or less, from the viewpoint of abrasion resistance.

A content of silica in the filler is preferably 50% by mass or more, more preferably 60% by mass or more, further preferably 70% by mass or more, further preferably 75% by mass or more, further preferably 80% by mass or more, particularly preferably 85% by mass or more, from the viewpoint of fuel efficiency. Moreover, it is preferably 99% by mass or less, more preferably 95% by mass or less, from the viewpoints of weather resistance and reinforcing property.

(Other fillers)

As fillers other than silica and carbon black, those commonly used in the tire industry can be compounded, such as aluminum hydroxide, calcium carbonate, alumina, clay, and talc.

<Softening agent>

The rubber composition of the present disclosure preferably comprises a softening agent. Examples of the softening agent include, for example, a resin component, oil, a liquid rubber, an ester-based plasticizer, and the like.

The resin component is not particularly limited, examples of which include a petroleum resin, a terpene-based resin, a rosin-based resin, a phenol-based resin, and the like, which are commonly used in the tire industry, and the resin component may be one obtained by hydrogenating them. These resin components may be used alone, or two or more thereof may be used in combination.

In the present specification, the "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a cyclopentadiene-based resin is appropriately used. Examples of the cyclopentadiene-based resin include a dicyclopentadiene resin (DCPD resin), a cyclopentadiene resin, a methylcyclopentadiene resin (non-hydrogenated cyclopentadiene-based resin), and those obtained by hydrogenating these cyclopentadiene-based resins (hydrogenated cyclopentadiene-based resins). As the cyclopentadiene-based resins, for example, those commercially available from ExxonMobil Chemical, etc. can be used.

In the present specification, an "aromatic petroleum resin" refers to a resin obtained by polymerizing a C9 fraction, and may be hydrogenated or modified. Examples of the C9 fraction include, for example, a petroleum fraction having 8 to 10 carbon atoms such as vinyltoluene, alkylstyrene, indene, and methyl indene. As specific examples of the aromatic petroleum resin, for example, a coumarone indene resin, a coumarone resin, an indene resin, and an aromatic vinyl-based resin are appropriately used.

As the aromatic vinyl-based resin, a homopolymer of α-methylstyrene derivative or styrene derivative, or a copolymer of α-methylstyrene derivative and styrene derivative and/or indene is preferable, from the reasons that they are economical, easy to process, and good in heat generation. Besides, the above-described "α-methylstyrene derivative" means an α-methylstyrene compound even if a benzene ring is substituted therein (preferably, an α-methylstyrene compound in which a benzene ring may be substituted with a saturated hydrocarbon group having 1 to 4 carbon atoms), and the above-described "styrene derivative" means a styrene compound even if a benzene ring is substituted therein (preferably, a styrene compound in which a benzene ring may be substituted with a saturated hydrocarbon group having 1 to 4 carbon atoms). As the above-described aromatic vinyl-based resin, for example, those commercially available from Mitsui Chemicals, Inc., Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenol resin include, for example, phenol, bisphenol A, cresol, xylenol, and the like. As the terpene-based resin, for example, those commercially available from Yasuhara Chemical Co., Ltd., etc. can be used.

Examples of the rosin-based resin include, but not particularly limited to, for example, a natural resin rosin, a modified rosin resin, and the like. As the rosin-based resin, for example, those commercially available from Arakawa Chemical Industries, Ltd., Harima Chemicals Group, Inc., etc. can be used.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

As the resin component, one or more selected from a group consisting of a petroleum resin and a terpene-based resin are preferable, and one or more selected from a group consisting of a cyclopentadiene-based resin, an aromatic vinyl-based resin, and a terpene-based resin are more preferable.

A softening point of the resin component is preferably 80°C or higher, more preferably 85°C or higher, further preferably 90°C or higher, from the viewpoint of wet grip performance. Moreover, it is preferably 160°C or lower, more preferably 150°C or lower, further preferably 145°C or lower, from the viewpoints of processability and improvement in dispersibility of a rubber component with a filler. Besides, the softening point in the present specification can be defined as a temperature at which a sphere drops when the softening point specified in JIS K 6220-1:2001 is measured with a ring and ball softening point measuring device.

A content of the resin component when compounded based on 100 parts by mass of the rubber component is preferably 1 parts by mass or more, more preferably 3 parts by mass or more, further preferably 5 parts by mass or more, from the viewpoint of wet grip performance. Moreover, the content is preferably 50 parts by mass or less, more preferably 40 parts by mass or less, further preferably 30 parts by mass or less, further preferably 25 parts by mass or less, particularly preferably 20 parts by mass or less, from the viewpoint of suppressing heat generation.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.

A content of oil when compounded based on 100 parts by mass of the rubber component is preferably 1 parts by mass or more, more preferably 3 parts by mass or more, further preferably 5 parts by mass or more, from the viewpoint of wet grip performance. Moreover, it is preferably 60 parts by mass or less, more preferably 50 parts by mass or less, further preferably 40 parts by mass or less, particularly preferably 30 parts by mass or less, from the viewpoint of abrasion resistance. Besides, the content of oil may be 0 part by mass. Besides, in the present specification, the content of oil also includes an amount of oil contained in an oil-extended rubber.

The liquid polymer is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like, and it may be those obtained by hydrogenating them, or may be modified liquid polymers in which main chains and/or terminals thereof are modified with a modifying group (preferably terminal-modified liquid polymers). These liquid polymers may be used alone, or two or more thereof may be used in combination.

Examples of the modified liquid polymer include, but not particularly limited to, for example, a liquid butadiene polymer modified at one or both ends thereof (terminal-modified liquid BR), a liquid styrene-butadiene polymer modified at one or both ends thereof (terminal-modified liquid SBR), and the like, and the modified liquid polymer may be one obtained by hydrogenating them. Among them, a terminal-modified liquid BR which may be hydrogenated is preferable.

The modifying group is not particularly limited, examples of which include, for example, a silyl group, a trialkoxysilyl group, an amino group, an amide group, an isocyanate group, an imino group, an imidazole group, an urea group, an ether group, a carbonyl group, an oxycarbonyl group, a sulfonyl group, a sulfinyl group, a thiocarbonyl group, an ammonium group, an imide group, a hydrazo group, an azo group, a diazo group, a nitrile group, a pyridyl group, an alkoxy group, a hydroxyl group, an oxy group, a carboxyl group, an epoxy group, an acrylic group, a methacrylic group, an acryloyl group, a methacryloyl group, and the like. Among them, one or more groups selected from a group consisting of a hydroxyl group, a carboxyl group, an acryloyl group, and a methacryloyl group are preferable.

A content of the liquid polymer when compounded based on 100 parts by mass of the rubber component is preferably 1 parts by mass or more, more preferably 2 parts by mass or more, further preferably 3 parts by mass or more, particularly preferably 5 parts by mass or more. Moreover, the content of the liquid rubber is preferably 30 parts by mass or less, more preferably 20 parts by mass or less, further preferably 15 parts by mass or less.

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone, or two or more thereof may be used in combination.

A content of the ester-based plasticizer when compounded based on 100 parts by mass of the rubber component is preferably 1 parts by mass or more, more preferably 2 parts by mass or more, further preferably 3 parts by mass or more, particularly preferably 5 parts by mass or more. Moreover, the content of the ester-based plasticizer is preferably 30 parts by mass or less, more preferably 20 parts by mass or less, further preferably 15 parts by mass or less.

A total content of the liquid polymer and the ester-based plasticizer based on 100 parts by mass of the rubber component is preferably 1 parts by mass or more, more preferably 3 parts by mass or more, further preferably 5 parts by mass or more, from the viewpoint of wet grip performance. Moreover, it is preferably 30 parts by mass or less, more preferably 20 parts by mass or less, further preferably 15 parts by mass or less, from the viewpoint of processability.

A content of the softening agent when compounded based on 100 parts by mass of the rubber component (a total amount of a plurality of softening agents when used in combination) is preferably 1 parts by mass or more, more preferably 3 parts by mass or more, further preferably 5 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

(Other compounding agents)

The rubber composition of the present disclosure can appropriately comprise compounding agents conventionally and generally used in the tire industry, for example, wax, processing aid, stearic acid, zinc oxide, an antioxidant, a vulcanizing agent, a vulcanization accelerator, and the like, in addition to the above-described components.

A content of wax when compounded based on 100 parts by mass of the rubber component is preferably 0.5 parts by mass or more, more preferably 1 parts by mass or more, from the viewpoint of weather resistance of a rubber. Moreover, it is preferably 10 parts by mass or less, more preferably 5 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide. Among them, a fatty acid amide is preferable. They may be used alone, or two or more thereof may be used in combination.

Examples of the fatty acid constituting the fatty acid metal salt include, but not particularly limited to, saturated or unsaturated fatty acids (preferably saturated or unsaturated fatty acids having preferably 6 to 28 (more preferably 10 to 25, further preferably 14 to 20) carbon atoms), for example, lauric acid, myristic acid, palmitic acid, stearic acid, oleic acid, linoleic acid, linolenic acid, arachidic acid, behenic acid, nervonic acid, and the like.

Examples of the metal constituting the fatty acid metal salt include, for example, alkali metals such as potassium and sodium, alkaline earth metals such as magnesium, calcium, and barium, zinc, nickel, molybdenum, and the like. Among them, zinc and calcium are preferable, and zinc is more preferable.

The fatty acid amide may be a saturated fatty acid amide or an unsaturated fatty acid amide. Examples of the saturated fatty acid amide include, for example, N-(1-oxooctadecyl)sarcosine, stearic acid amide, behenic acid amide, and the like. As the unsaturated fatty acid amide, ω-9 fatty acid amide (omega-9 fatty acid amide) is preferable. The ω-9 fatty acid is a type of unsaturated fatty acid and refers to fatty acid having a carbon-carbon double bond at a ω-9 position (the 9th bond position from the methyl end of the fatty acid). Moreover, the ω-9 fatty acid amide refers to a compound in which a carboxyl group of such ω-9 fatty acid reacts with an amino group to form an amide bond. Examples of the ω-9 fatty acid amide include oleic acid amide, eicosenoic acid amide, mead acid amide, erucic acid amide, nervonic acid amide, and the like. Among them, oleic acid amide is appropriately used because of its excellent compatibility with the rubber component compared with other fatty acid amides.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10.0 parts by mass or less, more preferably 8.0 parts by mass or less, further preferably 6.0 parts by mass or less, from the viewpoints of abrasion resistance and breaking strength.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10.0 parts by mass or less, more preferably 8.0 parts by mass or less, further preferably 6.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, from the viewpoint of processability. Moreover, it is preferably 10.0 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, from the viewpoint of processability. Moreover, it is preferably 10.0 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and it is more preferable that a sulfenamide-based vulcanization accelerator and a guanidine-based vulcanization accelerator are used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1.0 parts by mass or more, more preferably 2.0 parts by mass or more, further preferably 3.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

<Production of rubber composition and tire>

The rubber composition according to the present disclosure can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire of the present disclosure can be produced by a usual method using the above-described rubber composition. That is, the tire can be produced by extruding an unvulcanized rubber composition, obtained by compounding each of the above-described components based on the rubber component as necessary, into a shape of a tread with an extruder equipped with a mouthpiece having a predetermined shape, attaching it together with other tire members on a tire forming machine, and molding them by a usual method to form an unvulcanized tire, followed by heating and pressurizing this unvulcanized tire in a vulcanizing machine.

The tire of the present disclosure may be a pneumatic tire or a non-pneumatic tire. Moreover, it is appropriate for a racing tire, a tire for a passenger car, a tire for a large passenger car, a tire for a large SUV, a motorcycle tire, and the like, and can be used as a summer tire, a winter tire, or a studless tire thereof. Besides, the tire for a passenger car is a tire on the premise that it is mounted on a car running on four wheels and refers to one having a maximum load capacity of 1000 kg or less.

EXAMPLE

Although the present disclosure will be described based on Examples, it is not limited to Examples only.

Various chemicals used in Examples and Comparative examples are collectively shown below.

NR: TSR20
BR: Ubepol BR (Registered Trademark) 150B manufactured by Ube Industries, Ltd. (cis content: 97% by mass, Mw: 440,000)
SBR: Modified S-SBR produced in Production example 1 which will be described later (styrene content: 30% by mass, vinyl content: 52 mol%, Mw: 250,000, non-oil-extended product)
Carbon black: Show Black N220 manufactured by Cabot Japan K.K. ($N_2SA$: 111 $m^2$/g)
Silica: Ultrasil VN3 manufactured by Evonik Degussa GmbH ($N_2SA$: 175 $m^2$/g, average primary particle size: 18 nm)
Silane coupling agent: Si266 manufactured by Evonik Degussa GmbH (bis(3-triethoxysilylpropyl)disulfide)
Thermoplastic elastomer 1: HYBRAR 7125F manufactured by Kuraray Co., Ltd. (vinyl SEPS, Tg: -15°C, styrene content: 20% by mass)
Thermoplastic elastomer 2: HYBRAR 5125 manufactured by Kuraray Co., Ltd. (vinyl SIS, Tg: -13°C, styrene content: 20% by mass)
Thermoplastic elastomer 3: HYBRAR 5127 manufactured by Kuraray Co., Ltd. (vinyl SIS, Tg: 8°C, styrene content: 20% by mass)
Oil: Diana Process NH-70S manufactured by Idemitsu Kosan Co., Ltd.
Liquid BR: NISSO-PB GI-3000 manufactured by Nippon Soda Co., Ltd. (hydrogenated polybutadiene having hydroxyl group at both ends thereof)
Phosphate ester: Tris(2-ethylhexyl)phosphate (TOP) manufactured by DAIHACHI CHEMICAL INDUSTRY CO., LTD.
Resin component: Oppera PR-120 manufactured by ExxonMobil Chemical (hydrogenated dicyclopentadiene resin)
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Processing aid: ALFLOW E-10 manufactured by NOF CORPORATION (oleic acid amide)
Zinc oxide: Ginrei R manufactured by Toho Zinc Co., Ltd.
Sulfur: HK-200-5 manufactured by Hosoi Chemical Industry Co., Ltd. (5% oil-containing powdered sulfur)
Vulcanization accelerator 1: Nocceler D manufactured by Ouchi Shinko Chemical Industry Co., Ltd. (N,N'-diphenylguanidine)
Vulcanization accelerator 2: Nocceler CZ-G manufactured by Ouchi Shinko Chemical Industry Co., Ltd. (N-cyclohexyl-2-benzothiazolylsulfenamide)

Production Example 1: Synthesis of modified S-SBR

An autoclave reactor subjected to nitrogen purge was charged with cyclohexane, tetrahydrofuran, styrene, and 1,3-butadiene. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixture was subjected to removal of solvent by a steam stripping and dried by a heat roll whose temperature was adjusted to 110°C to obtain a modified S-SBR.

(Examples and Comparative examples)

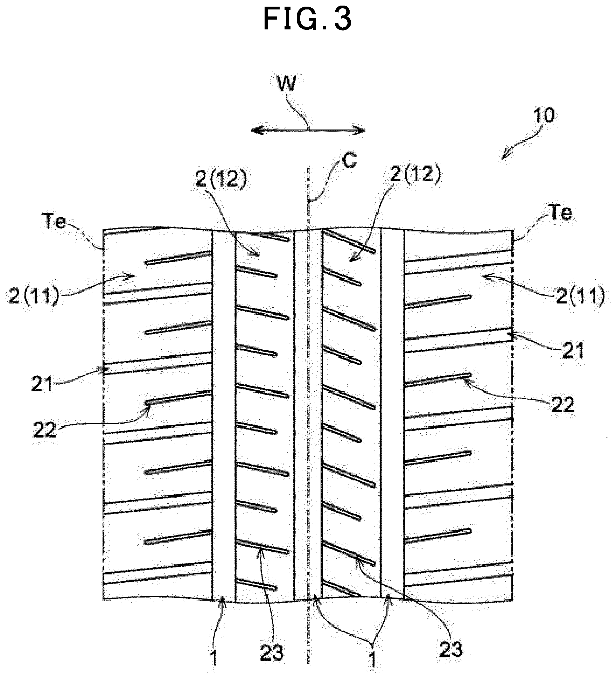

According to the compounding formulations shown in Table 1, using a 1.7 L closed Banbury mixer, all chemicals other than sulfur and vulcanization accelerators were kneaded at a discharge temperature of 160°C for 4 minutes to obtain a kneaded product. Next, using an open roll, sulfur and vulcanization accelerators were added to the obtained kneaded product, and the mixture was kneaded for 4 minutes until a temperature reached 105°C to obtain an unvulcanized rubber composition. Furthermore, the obtained unvulcanized rubber composition was press-vulcanized under a condition at 170°C for 12 minutes to obtain a test vulcanized rubber sheet. The obtained unvulcanized rubber composition was molded into a shape of a tread and attached together with other tire members, preparing an unvulcanized tire, followed by vulcanized at 170°C to obtain each test tire (size: 205/65R15, rim: 15 × 6JJ, internal pressure: 230 kPa). Besides, as shown in FIG. 3, the tires of Comparative examples 1 to 3, 5, and 6 have only linear-shaped circumferential grooves, lateral grooves, and sipes in the tread.

<Measurement of glass transition temperature (Tg)>

For each rubber test piece produced by being cut out with 20 mm in length × 4 mm in width × 1 mm in thickness from inside of a rubber layer of a tread part of each test tire so that a tire circumferential direction is on a long side, a temperature distribution curve of a loss tangent tan δ was measured under a condition of a frequency of 10 Hz and an elongational strain of 2.5%, using EPLEXOR series manufactured by gabo Systemtechnik GmbH, and a temperature corresponding to the largest tan δ value in the obtained temperature distribution curve (tan δ peak temperature) was defined as a glass transition temperature (Tg). Besides, a thickness direction of a sample was defined as a tire radial direction.

<Measurement of van der Waals force (CV value)>

Each rubber test piece after vulcanization was cut out with 20 mm in length × 30 mm in width × 2 mm in thickness from a cap tread of each test tire so that a tire circumferential direction is on a long side. Using an atomic force microscope equipped with a probe having a tip radius of 20 nm, 5 μm square of a surface of the obtained rubber test piece was scanned at 0°C and 23°C, a van der Waals force acting between the surface and the probe at each of 64 evenly spaced points per side is measured, respectively, and an average value of squared values of the van der Waals force measured at each point and a standard deviation of the squared values of the van der Waals force measured at each point were calculated, respectively. For each rubber test piece, a ratio $CV_0$ of the standard deviation of the squared values of the van der Waals force to the average value of the squared values of the van der Waals force at 0°C and a ratio $CV_{23}$ of the standard deviation of the squared values of the van der Waals force to the average value of the squared values of the van der Waals force at 23°C are shown in Table 1.

<On-ice grip performance>

Each test tire was mounted on four wheels of an FF passenger vehicle with a displacement of 2000 cc, respectively, and a braking distance from a point where a brake was applied at a speed of 15 km/h on an ice road surface was measured. On-ice grip performance of each tire was indicated as an index with the braking distance of the test tire in Comparative example 2 being as 100, according to the following equation. The results show that the larger the index is, the better the on-ice grip performance is.

$$\text{(On-snow grip performance index)} = \text{(braking distance of Comparative example 2) / (braking distance of each test tire)} \times 100$$

<Wet grip performance>

Each test tire was mounted on four wheels of an FF passenger vehicle with a displacement of 2000 cc, respectively, and a braking distance from a point where a brake was applied at a speed of 100 km/h on a wet asphalt road surface was measured. Wet grip performance of each tire was indicated as an index with the braking distance of the test tire in Comparative example 2 being as 100, according to the following equation. The results show that the larger the index is, the better the wet grip performance is.

$$\text{(Wet grip performance index)} = \text{(braking distance of Comparative example 2) / (braking distance of each test tire)} \times 100$$

Table 1

| | Compounding of tread rubber | | | | | | | | | | |
|---|---|---|---|---|---|---|---|---|---|---|---|
| | A | B | C | D | E | F | G | H | I | J | K |
| Compounding amount (part by mass) | | | | | | | | | | | |
| NR | 40 | 40 | 40 | 40 | 40 | 40 | 40 | 40 | 40 | 40 | 40 |
| BR | 60 | 60 | 60 | 60 | 60 | 60 | 24 | 60 | 60 | 60 | 60 |
| SBR | - | - | - | - | - | - | 36 | - | - | - | - |
| Carbon black | 10 | 10 | 10 | 10 | 10 | 10 | 10 | 10 | 10 | 10 | 10 |
| Silica | 60 | 60 | 60 | 60 | 60 | 60 | 60 | 90 | 60 | 60 | 60 |
| Silane coupling agent | 5.0 | 5.0 | 5.0 | 5.0 | 5.0 | 5.0 | 5.0 | 7.5 | 5.0 | 5.0 | 5.0 |
| Thermoplastic elastomer 1 | - | - | 5.0 | 15 | - | - | 5.0 | 5.0 | 5.0 | 5.0 | 5.0 |
| Thermoplastic elastomer 2 | - | - | - | - | 5.0 | - | - | - | - | - | - |
| Thermoplastic elastomer 3 | - | - | - | - | - | 5.0 | - | - | - | - | - |
| Oil | 25 | 15 | 25 | 25 | 25 | 25 | 25 | 25 | 25 | 25 | 25 |
| Liquid BR | - | - | - | - | - | - | - | - | 10 | - | - |
| Phosphate ester | - | - | - | - | - | - | - | - | - | 10 | - |
| Resin component | - | - | - | - | - | - | - | - | - | - | 10 |
| Antioxidant | 2.0 | 2.0 | 2.0 | 2.0 | 2.0 | 2.0 | 2.0 | 2.0 | 2.0 | 2.0 | 2.0 |
| Stearic acid | 1.5 | 1.5 | 1.5 | 1.5 | 1.5 | 1.5 | 1.5 | 1.5 | 1.5 | 1.5 | 1.5 |
| Processing aid | 2.0 | 2.0 | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 | 2.0 | 2.0 | 2.0 |
| Tg (°C) | -55 | -50 | -55 | -55 | -55 | -55 | -45 | -50 | -50 | -60 | -45 |
| $CV_0$ | 0.3 | 0.7 | 0.8 | 1.1 | 0.8 | 0.8 | 0.8 | 0.9 | 0.8 | 0.8 | 0.8 |
| $CV_{23}$ | 0.3 | 0.3 | 0.3 | 0.3 | 0.3 | 0.3 | 0.3 | 0.4 | 0.3 | 0.3 | 0.3 |
| $CV_0/CV_{23}$ | 1.0 | 2.3 | 2.7 | 3.7 | 2.7 | 2.7 | 2.7 | 2.3 | 2.7 | 2.7 | 2.7 |

Table 2

| | Example | | | | | |
|---|---|---|---|---|---|---|
| | 1 | 2 | 3 | 4 | 5 | 6 |
| Compounding of tread rubber | C | D | E | F | G | H |
| Tread pattern | FIG. 1 | FIG. 1 | FIG. 1 | FIG. 1 | FIG. 1 | FIG. 1 |
| Tire size | 205/65R17 96H | 205/65R17 96H | 205/65R17 96H | 205/65R17 96H | 205/65R17 96H | 205/65R17 96H |
| Tire cross-sectional width Wt (mm) | 204 | 205 | 205 | 205 | 206 | 204 |
| Tire outer diameter Dt (mm) | 697.0 | 698.3 | 698.3 | 698.3 | 699.6 | 697.0 |
| Value of inequality (1) | 1870 | 1868 | 1868 | 1868 | 1866 | 1870 |
| Evaluation | | | | | | |
| On-ice grip performance | 105 | 110 | 103 | 102 | 107 | 101 |
| Wet grip performance | 100 | 105 | 103 | 104 | 98 | 104 |

| | Example | | | | |
|---|---|---|---|---|---|
| | 7 | 8 | 9 | 10 | 11 |
| Compounding of tread rubber | I | J | K | K | K |
| Tread pattern | FIG. 1 | FIG. 1 | FIG. 1 | FIG. 2 | FIG. 1 |
| Tire size | 205/65R17 96H | 205/65R17 96H | 205/65R17 96H | 205/65R17 96H | 175/55R20 |
| Tire cross-sectional width Wt (mm) | 204 | 205 | 204 | 205 | 176 |
| Tire outer diameter Dt (mm) | 697.0 | 698.3 | 697.0 | 698.3 | 701.6 |
| Value of inequality (1) | 1870 | 1868 | 1870 | 1868 | 2197 |
| Evaluation On-ice grip performance | 107 | 107 | 104 | 102 | 112 |
| Wet grip performance | 101 | 97 | 105 | 107 | 117 |

Table 3

| | Comparative example | | | | | |
|---|---|---|---|---|---|---|
| | 1 | 2 | 3 | 4 | 5 | 6 |
| Compounding of tread rubber | A | C | B | A | F | C |
| Tread pattern | FIG. 3 | FIG. 3 | FIG. 3 | FIG. 1 | FIG. 3 | FIG. 3 |
| Tire size | 205/65R17 96H | 205/65R17 96H | 205/65R17 96H | 205/65R17 96H | 205/65R17 96H | 195/65R15 91H |

(continued)

| | Comparative example | | | | | |
|---|---|---|---|---|---|---|
| | 1 | 2 | 3 | 4 | 5 | 6 |
| Tire cross-sectional width Wt (mm) | 203 | 205 | 205 | 205 | 206 | 195 |
| Tire outer diameter Dt (mm) | 696.0 | 698.0 | 699.0 | 697.0 | 700.0 | 634.5 |
| Value of inequality (1) | 1874 | 1867 | 1872 | 1861 | 1868 | 1622 |
| Evaluation | | | | | | |
| On-ice grip performance | 95 | 100 | 100 | 90 | 96 | 92 |
| Wet grip performance | 100 | 100 | 90 | 100 | 106 | 102 |

From the results in Tables 1 to 3, it is found that the tire of the present disclosure having an inclined groove on a tread, wherein a parameter, obtained by a van der Waals force when scanning a rubber composition constituting the tread rubber under a predetermined temperature using an atomic force microscope, is set within a predetermined range, has improved on-ice grip performance and wet grip performance with a good balance.

<Embodiments>

Examples of embodiments of the present invention are shown below.

[1] A tire comprising a tread, wherein the tread has a groove inclined in a tire circumferential direction or a tire width direction, wherein the tread has at least one rubber layer consisting of a rubber composition comprising a rubber component, and wherein, using an atomic force microscope equipped with a probe having a tip radius of 20 nm, 5 $\mu$m square of a surface of the rubber composition is scanned at 0°C and 23°C, a van der Waals force acting between the surface and the probe at each of 64 evenly spaced points per side is measured, respectively, an average value of squared values of the van der Waals force measured at each point and a standard deviation of the squared values of the van der Waals force measured at each point are calculated, respectively, and when a ratio of the standard deviation of the squared values of the van der Waals force to the average value of the squared values of the van der Waals force at 0°C is defined as $CV_0$ and a ratio of the standard deviation of the squared values of the van der Waals force to the average value of the squared values of the van der Waals force at 23°C is defined as $CV_{23}$, $CV_0/CV_{23}$ is 2.0 or more (preferably 2.2 or more, more preferably 2.4 or more, further preferably 2.6 or more).
[2] The tire of [1] above, wherein the rubber composition comprises 1 to 30 parts by mass (preferably 2 to 25 parts by mass, more preferably 3 to 20 parts by mass, further preferably 4 to 18 parts by mass) of a thermoplastic elastomer based on 100 parts by mass of the rubber component.
[3] The tire of [2] above, wherein the thermoplastic elastomer has a glass transition temperature (Tg) of -20°C to 20°C (preferably -18°C to 15°C, more preferably -16°C to 10°C).
[4] The tire of [2] or [3] above, wherein the thermoplastic elastomer is a styrene-based thermoplastic elastomer.
[5] The tire of any one of [1] to [4] above, wherein the rubber component comprises at least one of an isoprene-based rubber and a butadiene rubber (preferably an isoprene-based rubber and a butadiene rubber).
[6] The tire of any one of [1] to [5] above, wherein the rubber component comprises a modified styrene-butadiene rubber.
[7] The tire of any one of [1] to [6] above, wherein the rubber composition comprises 30 to 130 parts by mass (preferably 40 to 110 parts by mass, more preferably 50 to 95 parts by mass) of silica based on 100 parts by mass of the rubber component.
[8] The tire of any one of [1] to [7] above, wherein the rubber composition comprises 1 to 20 parts by mass of at least one selected from a liquid polymer and a phosphate ester (preferably a liquid polymer) based on 100 parts by mass of the rubber component.

[9] The tire of any one of [1] to [8] above, wherein the rubber composition comprises 1 to 30 parts by mass (preferably 3 to 25 parts by mass, more preferably 5 to 20 parts by mass) of a resin component based on 100 parts by mass of the rubber component.

[10] The tire of any one of [1] to [9] above, wherein, when a tire cross-sectional width is defined as Wt (mm) and a tire outer diameter is defined as Dt (mm), Wt and Dt satisfy the following inequality (1):

$$(\pi/4) \times (Dt^2/Wt) \geq 1700 \quad (1)$$

[11] The tire of any one of [1] to [10] above, wherein the rubber composition has a glass transition temperature (Tg) of -65°C to -25°C (preferably -60°C to -30°C, more preferably -55°C to -35°C).

REFERENCE SIGNS LIST

1. Circumferential groove
5. Lateral groove
10. Tread
11. Shoulder land part
12. Center land part
21. Shoulder lateral groove
22. Shoulder sipe
23. Center Sipe
24. Center lateral groove
C. Tire equatorial plane
Te. Tread end

## Claims

1. A tire comprising a tread,

   wherein the tread has a groove inclined in a tire circumferential direction or a tire width direction,
   wherein the tread has at least one rubber layer consisting of a rubber composition comprising a rubber component, and
   wherein, using an atomic force microscope equipped with a probe having a tip radius of 20 nm, 5 $\mu$m square of a surface of the rubber composition is scanned at 0°C and 23°C, a van der Waals force acting between the surface and the probe at each of 64 evenly spaced points per side is measured, respectively, an average value of squared values of the van der Waals force measured at each point and a standard deviation of the squared values of the van der Waals force measured at each point are calculated, respectively, and when a ratio of the standard deviation of the squared values of the van der Waals force to the average value of the squared values of the van der Waals force at 0°C is defined as $CV_0$ and a ratio of the standard deviation of the squared values of the van der Waals force to the average value of the squared values of the van der Waals force at 23°C is defined as $CV_{23}$, $CV_0/CV_{23}$ is 2.0 or more.

2. The tire of claim 1, wherein the rubber composition comprises 1 to 30 parts by mass of a thermoplastic elastomer based on 100 parts by mass of the rubber component.

3. The tire of claim 2, wherein the thermoplastic elastomer has a glass transition temperature (Tg) of -20°C to 20°C.

4. The tire of claim 2 or 3, wherein the thermoplastic elastomer is a styrene-based thermoplastic elastomer.

5. The tire of any one of claims 1 to 4, wherein the rubber component comprises at least one of an isoprene-based rubber and a butadiene rubber.

6. The tire of any one of claims 1 to 5, wherein the rubber component comprises a modified styrene-butadiene rubber.

7. The tire of any one of claims 1 to 6, wherein the rubber composition comprises 30 to 130 parts by mass of silica based on 100 parts by mass of the rubber component.

8. The tire of any one of claims 1 to 7, wherein the rubber composition comprises 1 to 20 parts by mass of at least one selected from a liquid polymer and a phosphate ester based on 100 parts by mass of the rubber component.

9. The tire of any one of claims 1 to 8, wherein the rubber composition comprises 1 to 30 parts by mass of a resin component based on 100 parts by mass of the rubber component.

10. The tire of any one of claims 1 to 9, wherein, when a tire cross-sectional width is defined as Wt (mm) and a tire outer diameter is defined as Dt (mm), Wt and Dt satisfy the following inequality (1):

$$(\pi/4) \times (Dt^2/Wt) \geq 1700 \quad (1)$$

11. The tire of any one of claims 1 to 10, wherein the rubber composition has a glass transition temperature (Tg) of -65°C to -25°C.

# FIG. 1

# FIG. 2

# FIG.3

## INTERNATIONAL SEARCH REPORT

| International application No. |
| --- |
| **PCT/JP2021/038290** |

### A. CLASSIFICATION OF SUBJECT MATTER

**B60C 1/00**(2006.01)i; **C08K 5/521**(2006.01)i; **C08L 15/00**(2006.01)i; **C08L 21/00**(2006.01)i; **C08L 101/00**(2006.01)i; **C08K 3/36**(2006.01)i; **B60C 3/04**(2006.01)i; **B60C 11/00**(2006.01)i
FI: B60C11/00 D; B60C1/00 A; B60C3/04 B; C08L21/00; C08L15/00; C08K3/36; C08K5/521; C08L101/00

According to International Patent Classification (IPC) or to both national classification and IPC

### B. FIELDS SEARCHED

Minimum documentation searched (classification system followed by classification symbols)
B60C1/00; C08K5/521; C08L15/00; C08L21/00; C08L101/00; C08K3/36; B60C3/04; B60C11/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-210937 A (SUMITOMO RUBBER IND) 15 December 2016 (2016-12-15) <br> claims, examples | 1-11 |
| Y | JP 2017-101199 A (SUMITOMO RUBBER IND) 08 June 2017 (2017-06-08) <br> claims, examples | 1-11 |
| Y | JP 2016-94192 A (BRIDGESTONE CORP) 26 May 2016 (2016-05-26) <br> fig. 1-10, paragraph [0020] | 1-11 |
| Y | JP 2017-88021 A (BRIDGESTONE CORP) 25 May 2017 (2017-05-25) <br> fig. 1-13, paragraph [0029] | 1-11 |
| Y | JP 2012-218651 A (SUMITOMO RUBBER IND) 12 November 2012 (2012-11-12) <br> fig. 1-2, paragraph [0030] | 1-11 |
| Y | JP 2004-2622 A (SUMITOMO RUBBER IND) 08 January 2004 (2004-01-08) <br> paragraphs [0003]-[0004] | 5 |

✓ Further documents are listed in the continuation of Box C.  ✓ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 December 2021** | **21 December 2021** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

### INTERNATIONAL SEARCH REPORT

| | International application No. |
|---|---|
| | **PCT/JP2021/038290** |

**C.      DOCUMENTS CONSIDERED TO BE RELEVANT**

| Category* | Citation of document, with indication, where appropriate, of the relevant passages | Relevant to claim No. |
|---|---|---|
| Y | JP 2013-256585 A (SUMITOMO RUBBER IND) 26 December 2013 (2013-12-26) paragraphs [0064] | 6 |
| Y | JP 6769573 B1 (SUMITOMO RUBBER IND) 14 October 2020 (2020-10-14) claims, paragraph [0151] | 10 |
| A | JP 2007-223480 A (TOYO TIRE & RUBBER CO LTD) 06 September 2007 (2007-09-06) claims, examples | 1-11 |

Form PCT/ISA/210 (second sheet) (January 2015)

**INTERNATIONAL SEARCH REPORT**
Information on patent family members

International application No.

**PCT/JP2021/038290**

| Patent document cited in search report | | | Publication date (day/month/year) | Patent family member(s) | Publication date (day/month/year) |
|---|---|---|---|---|---|
| JP | 2016-210937 | A | 15 December 2016 | (Family: none) | |
| JP | 2017-101199 | A | 08 June 2017 | (Family: none) | |
| JP | 2016-94192 | A | 26 May 2016 | US 2013/0000805 A1<br>fig. 1-10, paragraph [0027]<br>EP 2546080 A1<br>CN 102883895 A | |
| JP | 2017-88021 | A | 25 May 2017 | (Family: none) | |
| JP | 2012-218651 | A | 12 November 2012 | US 2012/0261044 A1<br>fig. 1-2, paragraph [0070]<br>EP 2511107 A2<br>CN 102729737 A | |
| JP | 2004-2622 | A | 08 January 2004 | (Family: none) | |
| JP | 2013-256585 | A | 26 December 2013 | US 2013/0331498 A1<br>paragraph [0065]<br>CN 103483636 A | |
| JP | 6769573 | B1 | 14 October 2020 | (Family: none) | |
| JP | 2007-223480 | A | 06 September 2007 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019167410 A